# EUROPEAN PATENT SPECIFICATION

(11) **EP 3 023 641 B1**
(45) Date of publication and mention of the grant of the patent: **23.12.2020**
(21) Application number: 14194006.4
(22) Date of filing: 20.11.2014
(51) Int. Cl.: F04C 2/10, F16D 3/18, F04C 15/00

(54) **Cardan shaft for a hydraulic machine**
Kardanwelle für eine hydraulische Maschine
Arbre à cardan pour une machine hydraulique

(43) Date of publication of application: 25.05.2016
(73) Proprietor: Danfoss Power Solutions Aps, 6430 Nordborg (DK)
(72) Inventor: Sønnichsen, Vagn, 6430 Nordborg (DK)
(74) Representative: Keil & Schaafhausen Patentanwälte PartGmbB

(56) References cited:
- CH-A5- 626 951
- US-A- 4 474 544
- US-A- 5 061 160
- US-A1- 2004 052 670
- US-A1- 2005 271 536

## Description

The present invention relates to a cardan shaft for a hydraulic machine, said shaft comprising a shaft section having an axis, a tooth geometry at least at one end of said shaft section, said tooth geometry having a first end opposite said shaft section and a second end adjacent said shaft section, a number of teeth distributed in circumferential direction around said axis, a bottom curve between adjacent teeth, and an outer tooth curve, said bottom curve having a rising slope from said first end towards said shaft section and a negative slope at said second end.

Examples of such a shaft can be found in US 6 203 439 B1, US 6 264 567 B1, or DE 199 59 836 A1.

Such a shaft is usually used as cardan shaft to transmit an orbiting and rotating movement of a first element of a hydraulic machine to a purely rotating movement of a second element of a hydraulic machine. An example for such a hydraulic machine is a hydraulic steering unit or a hydraulic gerotor motor.

Such a cardan shaft is often named "dog bone" because it has some similarities with a dog bone, i.e. a shaft section having a smaller diameter and two tooth geometries at both ends having a larger diameter.

As mentioned above, the cardan shaft is used to transmit an orbiting and rotating movement of a first element to a purely rotating movement of a second element. This requires that the cardan shaft must have the possibility to pivot with respect to both elements during one rotation. This pivoting movement is possible due to the form of the outer tooth curve and due to the form of the bottom curve having a rising slope from the outer end, i.e. from the end opposite said shaft section, in a direction towards the shaft section. In other words, the radius of the bottom curve increases starting from the outer end of the cardan shaft. The second end has a negative slope, i.e. the radius of the bottom curve is decreasing towards the shaft section.

In US 2005/271536 A1, a wobble stick comprising a flat bottom between a positive slope at a first end of a teeth section and a negative slope at a second end of the teeth section is disclosed.

When the cardan shaft is used in a hydraulic machine to transmit large torques the tooth geometry tends to wear.

The object underlying the present invention is to keep wear as small as possible.

This object is solved with a cardan shaft as described at the outset in that said bottom curve comprises a section having a concave bottom curvature between said positive slope and said negative slope.

Prior art cardan shafts have a bottom curve having a convex bottom curvature between said positive slope and said negative slope. In other words, the largest radius of the bottom curve is just at the contact point of the positive slope and the negative slope. According to the present invention this convex bottom curvature is changed to a concave bottom curvature, said concave bottom curvature forming a kind of indentation of said bottom curve. Although it is not necessary that said concave bottom curvature is in the form of a circle, it can be said in general terms that the radius of the concave bottom curvature has a center point radially outside said tooth geometry. The concave bottom curvature improves the tribological performance. It allows for a better lubrication in this area.

In a preferred embodiment said outer tooth curve runs in a direction parallel to said axis and has a positive slope from said first end towards said shaft

Preferably said concave bottom curvature is located in an axial middle section of said tooth section. Therefore, the contact pressure in the axial middle of the tooth geometry is reduced.

Preferably a smallest radius of said bottom curve within said concave bottom curvature is larger than a smallest radius of said bottom curve axially outside said concave bottom curvature. The smallest radius can be, for example, at the outer end of the tooth geometry, i.e. at the end opposite said shaft section. The concave bottom curvature forms only a small indentation.

Preferably said concave bottom curvature is symmetric with respect to an axial middle. In the simplest form this means that the concave bottom curvature has the same axial length starting from the axial middle to the two ends of the tooth geometry. In a preferred embodiment the two branches starting from the axial middle of the concave bottom curvature have the same form.

Preferably each tooth has a thickness in said axial middle which is reduced with respect to a thickness of said tooth immediately outside said concave bottom curvature. This reduces the contact pressure in the region of the concave bottom curvature.

Preferably said outer tooth curve has a largest radius in said axial middle of said concave bottom curvature. This means that a section with positive slope can contact the section with negative slope.

In a preferred embodiment a distance between adjacent tooth bottoms at said axial middle is larger than a distance between adjacent tooth bottoms immediately outside said concave bottom curvature. The "valley" between two adjacent tooth bottoms becomes a bit broader in the region of the concave bottom curvature.

In a preferred embodiment each tooth comprises two tooth flanks in circumferential direction, said flanks being steeper in said axial middle than immediately outside said concave bottom curvature. This reduces the contact pressure as well.

Preferably said flanks comprise a concave flank curvature having the same axial position as said concave bottom curvature. This facilities the machining of the tooth geometry. When a tool is lowered into the part forming the basis of the cardan shaft this tool can remove material from the bottom of a space between two adjacent teeth forming the bottom curve and at the same time forming the flanks of the tooth.

A preferred embodiment of the invention will now be described in more detail with reference to the drawing, wherein:
- Fig. 1: is a schematic illustration of one end of a shaft,
- Fig. 2: is a section II-II of Fig. 1,

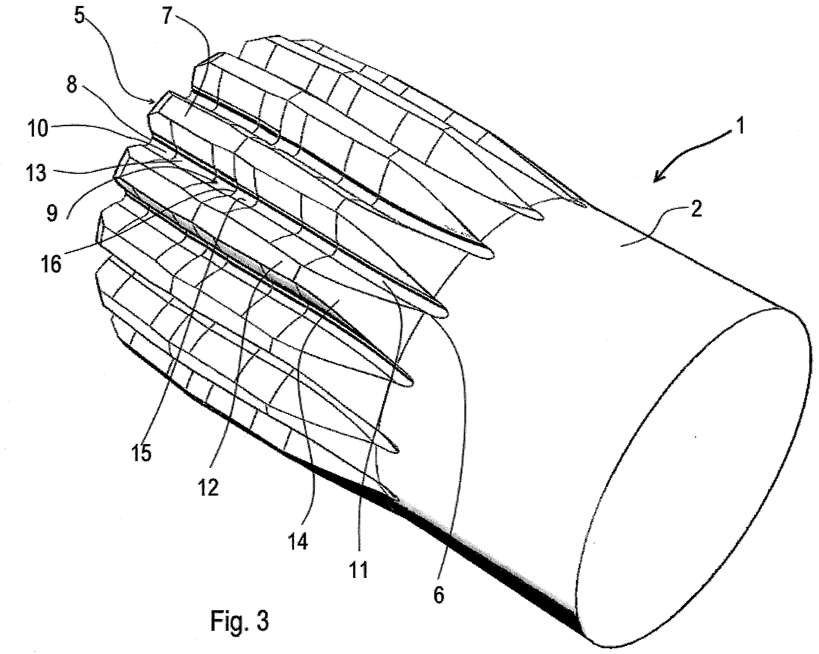

- Fig. 3: is a perspective view of the end of the shaft according to Fig. 1, and

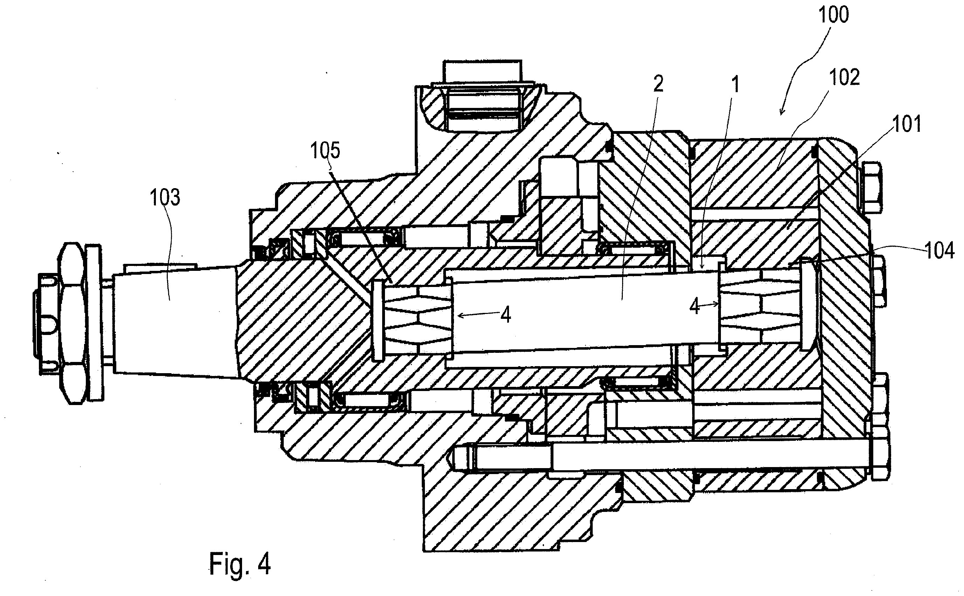

- Fig. 4: shows an example of use of the shaft in a motor.

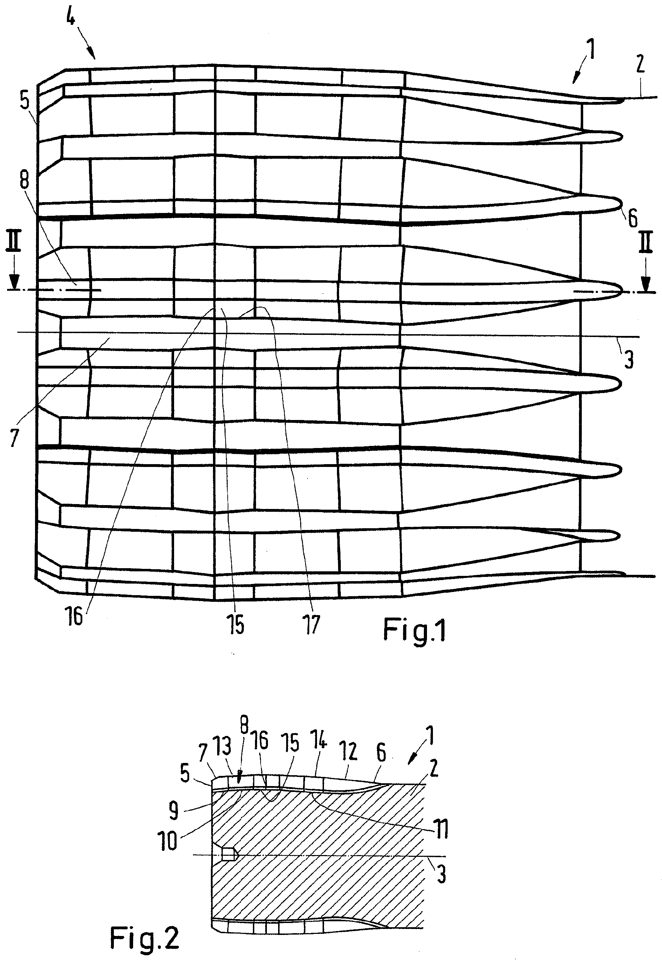

Fig. 1 shows a shaft 1 used as a cardan shaft having a shaft section 2 which is shown only partly. The shaft section 2 comprises an axis 3 about which the cardan shaft 1 can rotate during operation. Furthermore, the cardan shaft 1 comprises a tooth geometry 4 at least at one end of the shaft section 2. In most cases, such a tooth geometry 4 is provided at both axial ends of the shaft section 2.

Such a shaft 1 can be used in a hydraulic machine 100, in the present case a motor. The machine 100 has a first displacing element 101 made as a gear cooperating with a second displacing element 102 made as a ring gear. For this purpose the gear 101 rotates while simultaneously orbiting around an axis, that is, center of the gear 101 performs a rotation around this axis. Said axis is at the same time the axis of an output shaft 103 with which the displacement element 101 is unrotatably connected via the shaft 1. Upon rotation of the displacement element 101 the shaft 1 must be able to perform a certain swiveled movement, that is, it must be articulately connected with the displacement element 101.

To be able to perform this swiveled movement, both axial ends of the shaft 1 have a tooth geometry 4 in form of an external toothing. The tooth geometry at one end of the shaft 1 engages a schematically shown internal toothing 104 of the displacement element 101 and the other tooth geometry 4 engages an internal toothing 105 on the output shaft 103.

The tooth geometry has a first end 5 at an end of the cardan shaft 1 remote from the shaft section 2 and a second end 6 adjacent said shaft section 2. A number of teeth 7 is distributed in circumferential direction around said axis 3.

A groove 8 is located between each neighboring teeth 7. This groove 8 has a bottom curve 9. The bottom curve 9 has a first section 10 starting at the first end 5 and having a positive slope from said first end 5 towards said shaft section. Furthermore, said bottom curve 9 has a second section 11. The second section 11 has a negative slope towards said shaft section 2. In other words, in the first section 10 the radius of the bottom curve 9 is increasing in a direction towards the shaft section 2 and in the second section the radius of the bottom curve 9 is decreasing in a direction towards said shaft section 2. Furthermore, said tooth geometry 4 has an outer tooth curve 12. The outer tooth curve 12 extends in a direction parallel to the axis 3 and has a first section 13 with a positive slope from said first end 5 towards said shaft section 2 and a second section 14 having a negative slope in a direction towards said second end 6.

As can be seen in Fig. 2, the bottom curve 9 comprises a concave bottom curvature 15 which is located in an axial middle section of the tooth geometry 4. Although this concave bottom curvature 15 is not necessarily in form of a circle line, it can be said that a radius of this concave bottom curvature 15 would be located radially outside said tooth geometry 4.

The concave bottom curvature 15 has an axial middle 16. The concave bottom curve 15 has the smallest radius at the axial middle 16 of the concave bottom curve 15. Basically, the concave bottom curvature 15 is symmetric with respect to its axial middle 16. This means that the two branches of the concave bottom curvature 15 extending from the axial middle 16 are at least of the same axial length. In a preferred embodiment they have the same form.

This smallest radius of the bottom curve 9 within said concave bottom curvature 15 is larger than a smallest radius of said bottom curve 9 axially outside said concave bottom curvature 15. The smallest radius of the bottom curve 9 can be at the first end 5 or at the second end 6.

As can be seen from Fig. 1, each tooth 7 has a thickness in said axial middle 16 which is reduced with respect to a thickness of said tooth 7 immediately outside said concave bottom curvature 15.

On the other hand, the outer tooth curve 12 has a largest radius in said axial middle 16 of said concave bottom curvature 15.

As can be seen from Fig. 1 a distance between adjacent tooth bottoms at said axial middle 16 is larger than a distance between adjacent tooth bottoms immediately outside said concave bottom curvature 15.

Each tooth 7 comprises two tooth flanks in circumferential direction, said flanks being steeper in said axial middle 16 than immediately outside said concave bottom curvature 15. Furthermore, said flanks comprise a concave flank curvature 17 having the same axial position as said concave bottom curvature 15.

In this tooth geometry 4 the material of the teeth is removed in the region of the concave bottom curvature 15 to produce the convex bottom curvature. In order to facilitate the machining the distance between the tooth bottoms in circumferential direction is increased as well, however, only for a small amount.

The removal of material improves the tribological performance. It allows for a better lubrication in this area. Furthermore, it reduces the contact pressure in the axial middle 16 of the concave bottom curvature 15 which is located in the axial middle section of an active part of the tooth geometry 4.

The prior art tooth geometry can be termed as "crowning". This means that each tooth is wider in the axial middle part than at the axial ends. The present invention now makes a "double crowning" meaning that there is a thinner section in the thickened part between the two ends 5, 6 of each tooth 7.

This leads to the consequence that a permanent contact to the counterpart tooth in the center of the active part of the teeth 7 is avoided. Therefore, the contact area moves from one axial end 5 of the tooth 7 to the other axial end 6 of the tooth 7. In an area where is no contact the lubrication oil can reach this free area to form a lubrication oil film. There is no area in which there is a permanent pressure between the tooth 7 of the cardan shaft 1 and the tooth of a counter element.

## Claims

1. Cardan shaft (1) for a hydraulic machine comprising a shaft section (2) having an axis (3), a tooth geometry (4) at least at one end of said shaft section, said tooth geometry (4) having a first end (5) opposite said shaft section (2) and a second end (6) adjacent said shaft section (2), a number of teeth (7) distributed in circumferential direction around said axis (3), a bottom curve(9) between adjacent teeth (7), and an outer tooth curve (12), said bottom curve (9) having a positive slope from said first end (5) towards said shaft section (2) and a negative slope (11) at said second end (6), **characterized in that** said bottom curve (9) comprises a section having a concave bottom curvature (15) between said positive slope and said negative slope, said concave bottom curvature (15) forming an indentation of said bottom curve (9).

2. Shaft according to claim 1, **characterized in that** said outer tooth curve (12) extends in a direction parallel to said axis (3) and has a positive slope (13) from said first end (5) towards said shaft section (2) and a negative slope (14) at said second end (6).

3. Shaft according to claim 1 or 2, **characterized in that** the concave bottom curvature (15) is located in an axial middle section of said tooth geometry (4).

4. Shaft according to any of claims 1 to 3, **characterized in that** a smallest radius of said bottom curve (9) within said concave bottom curvature (15) is larger than a smallest radius of said bottom curve (9) axially outside said concave bottom curvature (15).

5. Shaft according to any of claims 1 to 4, **characterized in that** said concave bottom curvature (15) is symmetric with respect to an axial middle (16).

6. Shaft according to claim 5, **characterized in that** each tooth (7) has a thickness in said axial middle (16) which is reduced with respect to a thickness of said tooth (7) immediately outside said concave bottom curvature (15).

7. Shaft according to claim 5 or 6, **characterized in that** said outer tooth curve (12) has a largest radius in said axial middle (16) of said concave bottom curvature.

8. Shaft according to any of claims 5 to 7, **characterized in that** a distance between adjacent tooth bottoms at said axial middle (16) is larger than a distance between adjacent tooth bottoms immediately outside said concave bottom curvature (15).

9. Shaft according to claim 8, **characterized in that** each tooth (7) comprises two tooth flanks in circumferential direction, said flanks being steeper in said axial middle (16) than immediately outside said concave bottom curvature (15).

10. Shaft according to claim 9, **characterized in that** said flanks comprise a concave flank curvature (17) having the same axial position as said concave bottom curvature (15).

## Patentansprüche

1. Kardanwelle (1) für eine hydraulische Maschine, die einen Wellenabschnitt (2) mit einer Achse (3), eine Zahngeometrie (4) an mindestens einem Ende des Wellenabschnitts, wobei die Zahngeometrie (4) ein erstes Ende (5) gegenüber dem Wellenabschnitt (2) und ein zweites Ende (6) angrenzend an den Wellenabschnitt (2) aufweist, eine Anzahl von Zähnen (7), die in Umfangsrichtung um die Achse (3) herum verteilt sind, eine Bodenkurve (9) zwischen benachbarten Zähnen (7), und eine äußere Zahnkurve (12) aufweist, wobei die Bodenkurve (9) eine positive Neigung von dem ersten Ende (5) zu dem Wellenabschnitt (2) und eine negative Neigung (11) an dem zweiten Ende (6) aufweist, **dadurch gekennzeichnet, dass** die Bodenkurve (9) einen Abschnitt mit einer konkaven Bodenkrümmung (15) zwischen der positiven Neigung und der negativen Neigung aufweist, wobei die konkave Bodenkrümmung (15) eine Einbuchtung der Bodenkurve (9) bildet.

2. Welle nach Anspruch 1, **dadurch gekennzeichnet, dass** die äußere Zahnkurve (12) sich in einer Richtung parallel zu der Achse (3) erstreckt und eine positive Steigung (13) von dem ersten Ende (5) zu dem Wellenabschnitt (2) und eine negative Steigung (14) an dem zweiten Ende (6) aufweist.

3. Welle nach Anspruch 1 oder 2, **dadurch gekennzeichnet, dass** sich die konkave Bodenkrümmung (15) in einem axialen Mittelabschnitt der Zahngeometrie befindet.

4. Welle nach einem der Ansprüche 1 bis 3, **dadurch gekennzeichnet, dass** ein kleinster Radius der Bodenkurve (9) innerhalb der konkaven Bodenkrümmung (15) größer ist als ein kleinster Radius der Bodenkurve (9) außerhalb der konkaven Bodenkrümmung (15).

5. Welle nach einem der Ansprüche 1 bis 4, **dadurch gekennzeichnet, dass** die konkave Bodenkrümmung (15) in Bezug auf eine axiale Mitte (16) symmetrisch ist.

6. Welle nach Anspruch 5, **dadurch gekennzeichnet, dass** jeder Zahn (7) eine Dicke in der axialen Mitte (16) aufweist, die in Bezug auf eine Dicke des Zahns (7) unmittelbar außerhalb der konkaven Bodenkrümmung (15) vermindert ist.

7. Welle nach Anspruch 5 oder 6, **dadurch gekennzeichnet, dass** die äußere Zahnkurve (12) einen größten Radius in der axialen Mitte (16) der konkaven Bodenkrümmung aufweist.

8. Welle nach einem der Ansprüche 5 bis 7, **dadurch gekennzeichnet, dass** ein Abstand zwischen benachbarten Zahnböden in der axialen Mitte (16) größer ist als ein Abstand zwischen benachbarten Zahnböden unmittelbar außerhalb der konkaven Bodenkrümmung (15).

9. Welle nach Anspruch 8, **dadurch gekennzeichnet, dass** jeder Zahn (7) zwei Zahnflanken in Umfangsrichtung aufweist, wobei die Flanken in der axialen Mitte (16) steiler sind als unmittelbar außerhalb der konkaven Bodenkrümmung (15).

10. Welle nach Anspruch 9, **dadurch gekennzeichnet, dass** die Flanken eine konkave Flankenkrümmung (17) mit der gleichen axialen Position wie die konkave Bodenkrümmung (15) aufweisen.

## Revendications

1. Arbre à cardan (1) pour une machine hydraulique comprenant une section d'arbre (2) ayant un axe (3), une géométrie de dents (4) au moins à une extrémité de ladite section d'arbre, ladite géométrie de dents (4) ayant une première extrémité (5) opposée à ladite section d'arbre (2) et une seconde extrémité (6) adjacente à ladite section d'arbre (2), un nombre de dents (7) réparti dans une direction circonférentielle autour dudit axe (3), une courbure de fond (9) entre des dents adjacentes (7) et une courbure de dent extérieure (12), ladite courbure de fond (9) ayant une pente positive de ladite première extrémité (5) en direction de ladite section d'arbre (2) et une pente négative (11) à ladite seconde extrémité (6), **caractérisé en ce que** ladite courbure de fond (9) comprend une section ayant une courbure de fond concave (15) entre ladite pente positive et ladite pente négative, ladite courbure de fond concave (15) formant une indentation de ladite courbure de fond (9) .

2. Arbre selon la revendication 1, **caractérisé en ce que** ladite courbure de dent extérieure (12) s'étend dans une direction parallèle audit axe (3) et a une pente positive (13) de ladite première extrémité (5) en direction de ladite section d'arbre (2) et une pente négative (14) à ladite seconde extrémité (6).

3. Arbre selon la revendication 1 ou 2, **caractérisé en ce que** la courbure de fond concave (15) est située dans une section médiane axiale de ladite géométrie de dent (4) .

4. Arbre selon l'une quelconque des revendications 1 à 3, **caractérisé en ce qu'**un rayon le plus petit de ladite courbure de fond (9) à l'intérieur de ladite courbure de fond concave (15) est plus grand qu'un rayon le plus petit de ladite courbure de fond (9) axialement hors de ladite courbure de fond concave (15).

5. Arbre selon l'une quelconque des revendications 1 à 4, **caractérisé en ce que** ladite courbure de fond concave (15) est symétrique par rapport à un centre axial (16) .

6. Arbre selon la revendication 5, **caractérisé en ce que** chaque dent (7) a une épaisseur dans ledit centre axial (16) qui est réduite par rapport à une épaisseur de ladite dent (7) immédiatement hors de ladite courbure de fond concave (15).

7. Arbre selon la revendication 5 ou 6, **caractérisé en ce que** ladite courbure de dent extérieure (12) a un rayon le plus grand dans ledit centre axial (16) de ladite courbure de fond concave.

8. Arbre selon l'une quelconque des revendications 5 à 7, **caractérisé en ce qu'**une distance entre des fonds de dent adjacents sur ledit centre axial (16) est plus grande qu'une distance entre des fonds de dent adjacents immédiatement hors de ladite courbure de fond concave (15).

9. Arbre selon la revendication 8, **caractérisé en ce que** chaque dent (7) comprend deux flancs de dent dans la direction circonférentielle, lesdits flancs étant plus pentus dans ledit centre axial (16) qu'immédiatement hors de ladite courbure de fond concave (15).

10. Arbre selon la revendication 9, **caractérisé en ce que** lesdits flancs comprennent une courbure de flanc concave (17) ayant la même position axiale que ladite courbure de fond concave (15).
